# FASCICULE DE BREVET EUROPEEN

(11) **EP 0 585 434 B1**
(45) Date de publication et mention de la délivrance du brevet: **27.12.2000**
(21) Numéro de dépôt: 93905406.0
(22) Date de dépôt: 18.02.1993
(51) Int. Cl.: H04B 14/04, H04B 1/66

(54) **PROCEDE ET DISPOSITIF DE FILTRAGE POUR LA REDUCTION DES PREECHOS D'UN SIGNAL AUDIO-NUMERIQUE**
FILTERVERFAHREN UND -EINRICHTUNG ZUR VERRINGERUNG DER VORECHOS IN EINEM DIGITALEN AUDIOSIGNAL
FILTERING METHOD AND DEVICE FOR REDUCING DIGITAL AUDIO SIGNAL PRE-ECHOES

(30) Priorité: 25.02.1992 FR 9202164
(43) Date de publication de la demande: 09.03.1994
(73) Titulaire: FRANCE TELECOM, 75015 Paris (FR)
(72) Inventeur: MAHIEUX, Yannick, F-22140 Bégard (FR)
(74) Mandataire: Fréchède, Michel
(86) Numéro de dépôt international: FR9300165
(87) Numéro de publication internationale: WO9317508

(56) Documents cités:
- EP-A- 0 446 031
- EP-A- 0 466 190
- WO-A-86/01665
- FR-A- 2 653 280

## Description

L'invention concerne un procédé et un dispositif de filtrage pour la réduction des prééchos d'un signal audio-numérique. Le stockage, la transmission ou le traitement des signaux sonores numérisés, signaux audio-numériques, se heurtent actuellement au problème du débit de transmission numérique nécessaire. Des techniques telles que le codage par transformée fréquentielle sont alors utilisées, afin de permettre de discriminer le débit de transmission nécessaire, tout en conservant la qualité du signal d'origine.

Cependant, du fait même de l'extrême variété des signaux sonores, les procédés ou techniques précités ne permettent pas toujours de conserver la qualité du signal d'origine.

Le codage par transformée fréquentielle a, jusques ici, été largement utilisé pour le codage du son haute-fidélité.

De manière générale, ce type de codage procède par découpage du signal audio-numérique, temporel, en blocs de N échantillons, suivi d'une pondération par une fenêtre de chaque bloc, puis par une transformation temps/fréquence délivrant un jeu de coefficients, lesquels sont codés et enfin transmis. Pour une description plus détaillée de ce type de codage, on pourra utilement se reporter à la demande de brevet français 89 13649, inventeur Yannick MAHIEUX, publiée sous le numéro 2 653 280.

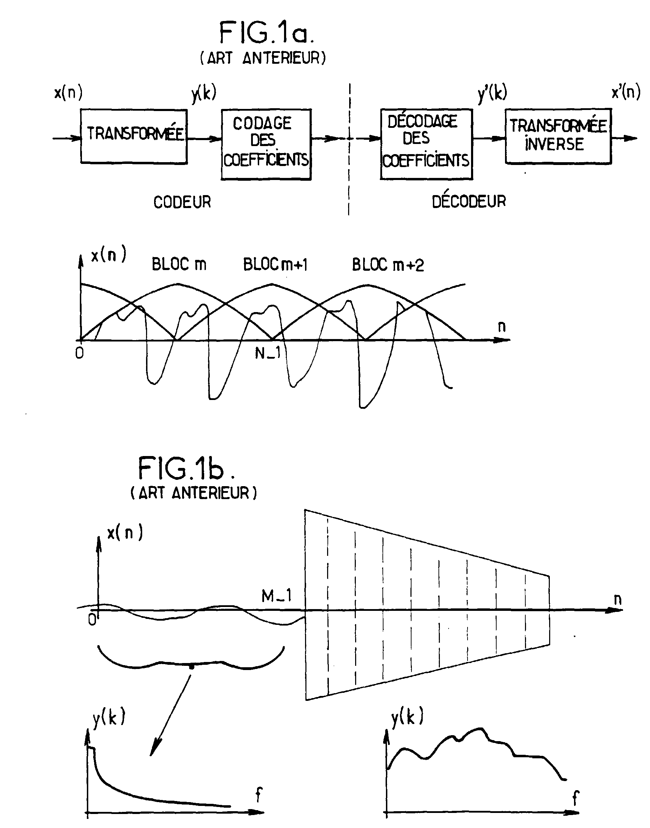

Plusieurs transformées fréquentielles peuvent être utilisées, mais la Transformée en Cosinus Discrète Modifiée, TCDM, est particulièrement intéressante et permet une réduction plus importante du débit, grâce à l'utilisation de fenêtres de pondération aux bords adoucis, associée à un fort recouvrement de N/2 échantillons entre deux blocs successifs, ainsi que représenté en figure 1a.

Dans ce type de codage par transformée, le bruit de codage résultant de la quantification des coefficients issus de la transformée est réparti uniformément sur toute la durée de chaque bloc. Lorsque le bloc d'échantillons contient une non stationnarité telle que celle provoquée par exemple par l'attaque brusque d'un instrument à cordes, confer figure 1b, alors le spectre en fréquence du signal est à peu près plat. Cependant, les processus de codage précités réalisent généralement une mise en forme spectrale du bruit, confer la demande de brevet français précitée. Ainsi, pour un bloc contenant une transition brusque, le spectre du bruit est à peu près plat et d'un niveau constant pour toute la durée du bloc.

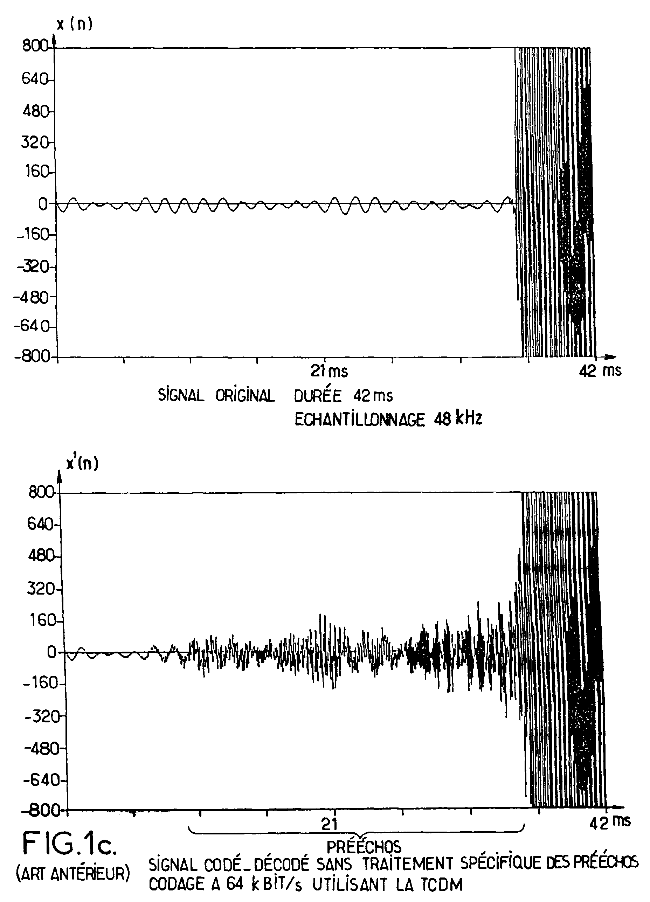

Par conséquent, en ce qui concerne la partie du signal audio-numérique précédant l'attaque, le spectre de bruit est bien supérieur à celui du signal et, ainsi que représenté en figure 1c, dans le domaine temporel, la dégradation constituant le phénomène de prééchos peut être très importante.

Lorsque, d'autre part, le système de codage utilise la transformée TCDM, les deux blocs précédant la transition sont affectés des prééchos, du fait du chevauchement de N/2 échantillons entre fenêtres successives.

Parmi les méthodes proposées pour réduire ou éliminer les prééchos, l'une d'elles préconise l'emploi de facteurs d'échelle appliqués au bloc d'échantillons avant le traitement par transformée fréquentielle, de façon à réduire la différence de niveau entre les parties antérieure et postérieure à la transition.

Au décodage, par l'application de facteurs d'échelle inverses, le niveau du bruit est réduit dans les zones de faible énergie et le phénomène des prééchos diminué en conséquence. Pour une description plus complète, on pourra se reporter par exemple à l'article de Sugiyama : Adaptive Transform Coding with an adaptive Block Size, Proceedings of ICASSP 90, Albuquerque, pp 1093-1096.

Une telle méthode, lorsqu'une transformée TCDM est utilisée, ne peut cependant pas être employée, car, du fait des facteurs d'échelle, il n'est pas possible de procéder, abstraction faite du codage, à une reconstruction parfaite du signal audio-numérique.

Une deuxième méthode, parmi les méthodes précitées, peut consister en l'emploi de blocs de longueur variable, la taille de la transformée, pour un bloc d'échantillons comportant une transition brusque étant réduite à N/8 points, ce qui permet de limiter ainsi la durée de la dégradation, confer par exemple le document ISO-IEC-WG8-MPEG 89/205.

Bien que cette deuxième méthode puisse être employée lorsqu'une transformée TCDM est utilisée, les fenêtres de pondération des blocs d'échantillons doivent être modifiées. En outre, il est nécessaire de détecter la transition sur le bloc suivant le bloc actuel en cours de traitement, ce qui accroît le retard du système de codage. Enfin, pour les blocs de longueur réduite, la résolution fréquentielle est diminuée et, en conséquence, l'efficacité du codage l'est aussi.

Une troisième méthode, enfin, a fait l'objet d'une demande de brevet français n° 91 03715 déposée le 27 mars 1991. Dans la méthode décrite dans cette demande de brevet, le filtre dont les paramètres varient en fonction des caractéristiques locales du signal et du bruit opère, au niveau du décodeur, un filtrage de type filtrage de Kalman sur les échantillons du signal reconstruit qui Sont affectés par le phénomène des prééchos.

La solution proposée par la dernière méthode citée permet d'éliminer les inconvénients inhérents aux deux autres méthodes mentionnées. Toutefois, elle ne permet pas dans tous les cas une reconstruction parfaite du signal audio-numérique d'origine pour des raisons de charge importante de calcul, laquelle ne permet pas un traitement en temps réel. En effet, pour les raisons précitées, les modèles utilisés par le filtrage de type filtrage de Kalman sont nécessairement limités et, ce filtre étant calculé de façon adaptative au niveau du décodeur, l'information disponible n'est pas toujours suffisante pour définir ce dernier de façon optimale.

Le document WO 86/01665 publié le 13 mars 1986 décrit, dans un système de communication numérïque mettant en oeuvre un processus de codage-décodage de ce signal, la mise en oeuvre, après le décodage, d'un filtre de réduction du bruit de quantification à partir de paramètres de codage fréquentiel. Les caractéristiques du filtre sont ainsi établies au niveau du décodeur.
Un tel système n'est pas mis en oeuvre pour la réduction des prééchos d'un signal audionumérique. Un tel processus est mis en oeuvre en vue du traitement des dégradations engendrées en fonction du débit de transmission.

Le procédé et le dispositif de filtrage pour la réduction des prééchos d'un signal audio-numérique objets de la présente invention ont pour but de remédier aux inconvénients des méthodes antérieures précédemment citées.

Le procédé de traitement des prééchos d'un signal audio-numérique d'origine, suite d'échantillons x(n) constitués en blocs de N échantillons x(n), codés selon un processus de codage puis décodés selon un processus de décodage, le processus de codage consistant en une étape de traitement par transformée fréquentielle en coefficients y(k) suivie d'une étape de codage de ces coefficients pour assurer la transmission de coefficients codés Cy(k) et le processus de décodage consistant en une étape de décodage des coefficients codés transmis en coefficients y'(k) suivie d'une étape de traitement par transformée fréquentielle inverse pour engendrer un signal d'origine après transmission x'(n), est remarquable en ce qu'il consiste, en outre, au cours du processus de codage, suite à l'étape de codage des coefficients pour transmission des coefficients codés, à effectuer une étape de décodage des coefficients codés Cy(k) pour engendrer des coefficients estimés y''(k) puis de traitement par transformée fréquentielle inverse des coefficients estimés y''(k) pour engendrer un signal décodé x''(n), à déterminer le gabarit optimal de filtrage parmi un ensemble de gabarits de filtrage donné et les paramètres de gain du filtrage associé pour reconstituer le signal d'origine x(n). Le gabarit optimal de filtrage et les paramètres de gain sont choisis de façon que le produit de convolution x''(n)*hj(n) du signal décodé x''(n) et de la réponse impulsionnelle hj(n) du filtre soit le plus proche du signal d'origine x(n), le filtre choisi réalisant un filtrage adapté au signal d'origine. Les paramètres de gain et de gabarit optimal de filtrage et les coefficients codés Cy(k) sont transmis simultanément vers le processus de décodage. Après l'étape de décodage des coefficients transmis et l'étape de traitement par transformée fréquentielle inverse pour engendrer le signal d'origine après transmission x'(n), le filtrage adapté de ce signal d'origine après transmission x'(n) est effectué pour engendrer un signal d'origine après transmission et traitement xt(n).

Le système de traitement des prééchos d'un signal audio-numérique d'origine, suite d'échantillons x(n) constitués en blocs de N échantillons successifs, transmis entre un dispositif codeur (1) et un dispositif décodeur (2), le dispositif codeur (1) comportant un module (10) de traitement par transformée fréquentielle en coefficients y(k) et un module (11) de codage de ces coefficients pour assurer la transmission des coefficients codés et le dispositif de décodage (2) comportant un module (20) de décodage des coefficients codés transmis en coefficients y'(k) et un module (21) de traitement par transformée fréquentielle inverse pour engendrer un signal d'origine après transmission x'(n), est remarquable en ce qu'il comprend, en outre, au niveau du dispositif codeur (1), en aval du module (11) de codage, un module (12) de décodage des coefficients codés délivrant des coefficients estimés y''(k), un module (13) de traitement par transformée fréquentielle inverse des coefficients estimés y''(k) pour engendrer un signal décodé x''(n) et un module (14) de sélection, parmi plusieurs gabarits de filtrage, des paramètres optimaux du filtrage et de mémorisation des paramètres du filtrage adapté, gain g(j) et gabarit optimal de filtrage. Le gabarit optimal de filtrage et les paramètres de gain sont choisis de façon que le produit de convolution x''(n)*hj(n) du signal décodé x''(n) et de la réponse impulsionnelle hj(n) du filtre soit le plus proche du signal d'origine x(n), le filtre hj(n) choisi réalisant un filtrage adapté au signal d'origine. Un circuit (15) de multiplexage temporel des coefficients codés et des paramètres de filtrage adapté permet d'assurer la transmission simultanée de ces derniers vers le dispositif décodeur.

Le procédé et le système objets de l'invention trouvent application au traitement, à la transmission et à la mémorisation de signaux audio-numériques dans l'industrie des phonogrammes ou vidéogrammes.

Une description plus détaillée du procédé et du système objets de la présente invention sera donnée ci-après dans la description et les dessins dans lesquels, outre les figures 1a à 1c relatives à l'art antérieur,
- la figure 2a représente, à titre de schéma illustratif, les étapes de mise en oeuvre du procédé objet de l'invention,
- la figure 2b représente, à titre de schéma illustratif, un détail de mise en oeuvre du procédé de traitement des prééchos objet de l'invention tel que représenté en figure 2a,
- la figure 3a représente, sous forme de schéma bloc, un système de traitement des prééchos permettant la mise en oeuvre du procédé de traitement des prééchos objet de la présente invention,
- la figure 3b représente, à titre d'exemple, un détail de réalisation d'un module de sélection de filtre constitutif, au niveau du codeur, du système représenté en figure 3a,
- la figure 3c représente, à titre d'exemple, un détail de réalisation d'un sous-module de sélection de filtre constitutif du module de sélection de filtre représenté en figure 3b,
- la figure 4a représente un détail de réalisation du module de filtrage optimal au niveau du décodeur, selon l'objet de la présente invention,
- la figure 4b représente un chronogramme des signaux transmis après traitement dans lesquels le phénomène des prééchos est supprimé.

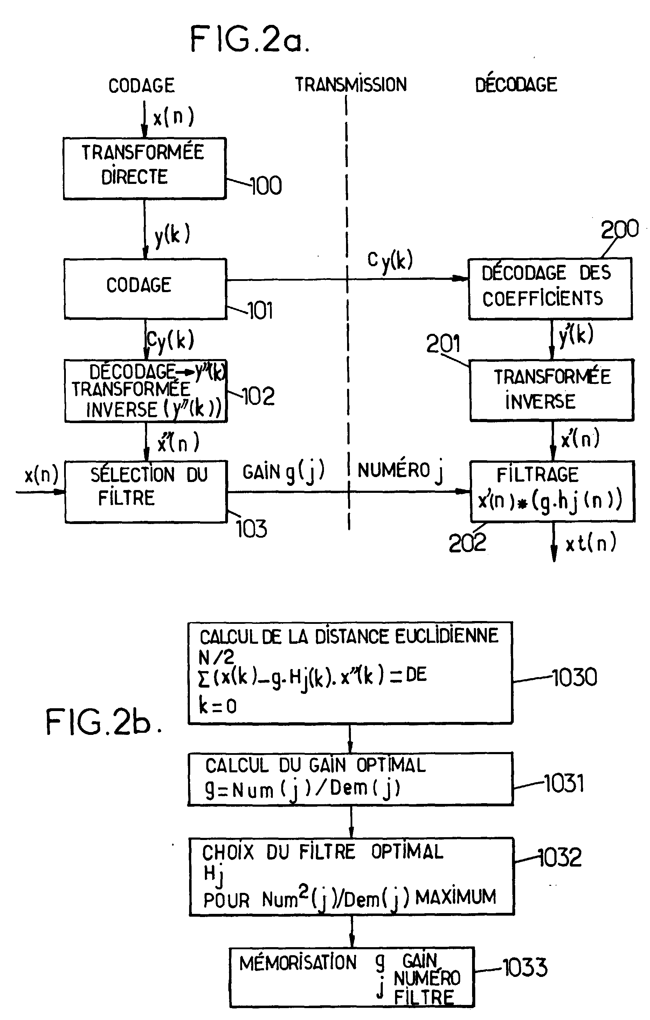

Une description plus détaillée du procédé de filtrage pour la réduction des prééchos d'un signal audio-numérique sera maintenant donnée en liaison avec les figures 2a et 2b.

D'une manière générale, le procédé objet de la présente invention réalise le traitement des prééchos d'un signal audio-numérique d'origine constitué par une suite d'échantillons x(n) constituée par exemple en blocs comprenant N échantillons. Ces échantillons sont transmis codés selon un processus de codage puis décodés selon un processus de décodage. Le processus de codage peut consister en une étape, notée 100, de traitement par transformée fréquentielle, telle qu'un traitement par transformée en cosinus directe modifiée, cette étape étant suivie d'une étape 101 de codage des coefficients y(k) obtenus suite à l'étape 100 en coefficients codés notés Cy(k), alors que le processus de décodage consiste par exemple en une étape, notée 200, de décodage des coefficients codés transmis en coefficients y'(k) suivie d'une étape de traitement par transformée fréquentielle 201 inverse, cette transformée étant une transformée en cosinus directe modifiée inverse, pour engendrer un signal d'origine après transmission, noté x'(n).

Ainsi qu'on l'a en outre représenté en figure 2a, le procédé objet de l'invention consiste, au cours du processus de codage, suite à l'étape de codage 101 précitée, à effectuer sur les coefficients codés Cy(k) une étape de décodage pour engendrer des coefficients estimés y''(k) puis de traitement par transformée fréquentielle inverse de ces coefficients estimés y''(k) pour engendrer un signal décodé noté x''(n).

D'une manière générale, le signal décodé x''(n) obtenu au niveau du codage après mise en oeuvre de l'étape 102 de décodage et de traitement par transformée fréquentielle inverse est considéré comme identique au signal d'origine après transmission x'(n) obtenu après la mise en oeuvre de l'étape 201 de traitement par transformée inverse au niveau du décodage, car ces deux signaux diffèrent uniquement par l'étape de transmission des coefficients codés Cy(k) vers le processus de décodage, cette transmission, réalisée de manière classique, étant réputée ne pas altérer sensiblement les valeurs des coefficients codés précités.

En outre, ainsi qu'on l'a représenté en figure 2a, le procédé objet de la présente invention consiste ensuite à déterminer à l'étape 103 le gabarit optimal de filtrage parmi un ensemble de gabarits de filtrage donné. Le gabarit optimal de filtrage est obtenu par détermination des paramètres de gain et de gabarit, c'est-à-dire de fonction de transfert du filtrage associé correspondant, permettant de reconstituer le signal d'origine x(n).

Le procédé objet de la présente invention consiste alors ensuite à transmettre simultanément vers le processus de décodage les coefficients codés Cy(k) et les paramètres de gain notés g(j) et de gabarit j de filtrage adapté vers le processus de codage précité.

Selon un mode de mise en oeuvre avantageux non limitatif, on notera que le paramètre de gabarit de filtrage transmis peut, par exemple, être constitué par le numéro d'ordre j d'un élément de filtrage déterminé constitutif de l'ensemble de gabarits de filtrage donnés précédemment mentionné.

Suite à la transmission des coefficients codés Cy(k), et des paramètres de gain g(j) et de gabarit de filtrage j vers le processus de décodage, le procédé objet de la présente invention consiste à effectuer au niveau du décodage, après l'étape 200 de décodage des coefficients transmis et l'étape de traitement 201 par transformée fréquentielle inverse pour engendrer le signal d'origine après transmission x'(n), un filtrage adapté du signal d'origine après transmission précité pour engendrer le signal d'origine après transmission et traitement, ce signal étant noté xt(n) et l'opération de filtrage adapté étant notée 202 sur la figure 2a. Bien entendu, le signal xt(n) est réputé sensiblement identique au signal d'origine x(n), le phénomène de prééchos ayant été supprimé.

La mise en oeuvre du procédé de traitement des prééchos d'un signal audio-numérique objet de la présente invention est basée sur le principe ci-après.

Pour un signal d'origine x(n), le bruit de préécho b(n) et le signal d'origine décodé et reconstruit au niveau du processus de décodage après le traitement par transformée fréquentielle inverse vérifie la relation :$\text{x'(n) = x(n)+b(n), avec x'(n) = x''(n).}$

Au niveau du codage, les trois signaux précités sont connus, car $\text{x'(n) = x''(n)}$, alors qu'au niveau du décodage, seul le signal d'origine après transmission x'(n) est disponible.

Les transformées de Fourier de ces signaux étant notées respectivement X(f), B(f) et X'(f), les spectres correspondants X(f) et B(f) sont généralement disjoints et, par conséquent, le bruit b(n) peut être éliminé dans le signal d'origine après transmission x'(n) à l'aide d'un filtre dont la réponse impulsionnelle sera notée h(n) et la fonction de transfert dans le domaine fréquentiel sera notée H(f). En outre, pour les échantillons précédant une attaque brusque, le signal d'origine x(n) présente très souvent un spectre limité en fréquence. Il s'agit en effet de l'extinction de la note précédente, laquelle correspond en général à une sinusoïde basse fréquence. Le filtre de réponse impulsionnelle h(n) est donc un filtre de type passe-bas.

L'étape 103 de sélection du filtre telle que représentée en figure 2a est effectuée dans le domaine fréquentiel.

D'une manière générale, on considèrera que le filtre hj(n) est choisi au cours de cette étape de sélection dans un ensemble de M filtres dont la réponse impulsionnelle est notée hi, avec i ε [0,M-1]. Ce choix est effectué de façon que le résultat du produit de convolution x''(n)*hj(n), où j égale l'une des valeurs de i précité, soit le plus proche possible de x(n), pour réaliser un filtrage adapté au signal d'origine x(n). Le filtre ainsi retenu est celui pour lequel le produit, dans le domaine des fréquences, Hj(f).X''(f) est le plus proche du spectre de la transformée de Fourier X(f) précitée.

Les performances du procédé objet de l'invention sont naturellement accrues si un gain g(j) est associé au filtre hj(n).

Selon un aspect particulièrement avantageux du procédé objet de la présente invention, celui-ci prend en compte la distance entre le spectre du signal d'origine X(f) et le produit g(j).Hj(f).

Les paramètres de gain g et de gabarit de filtrage ayant été sélectionnés, le numéro du filtre j et la valeur du gain g sont alors transmis vers le processus de décodage.

Le processus de décodage au niveau de l'étape 202 effectue alors une étape de filtrage à partir de la réponse impulsionnelle hj(n) du filtre par le calcul du produit de convolution du signal d'origine après transmission x'(n) issu de l'étape 201, par le produit g.hj(n) pour les échantillons concernés par le phénomène de préécho.

Une description plus détaillée du processus de sélection du filtre mis en oeuvre à l'étape 103 de la figure 2a sera donnée en liaison avec la figure 2b.

Le problème de la sélection du filtre et du calcul du gain consiste à rechercher, dans un ensemble de fonctions de transfert, ou de gabarits Hi, avec i ε [0,M-1], le filtre ou gabarit Hj optimal et à calculer le gain g(j) correspondant tel que la distance euclidienne entre le spectre du signal d'origine X(f) et le spectre du signal décodé filtré soit minimale.

La distance euclidienne retenue finalement sélectionnée s'écrit :${\text{Min}}_{\text{i}} \text{[} \text{f=0} \text{Fe/2} {\text{|X(f)-g.Hj(f).X''(f)|}}^{\text{2}} \text{]}$

Dans cette relation, Fe est la fréquence d'échantillonnage du signal d'origine.

Dans la suite de la description, on note $\text{g(j) = g}$, la valeur du gain obtenue pour la valeur de la distance euclidienne minimale.

Conformément à un aspect particulièrement avantageux du procédé objet de la présente invention, le calcul de la distance euclidienne est effectué en une étape 1030 suite à un traitement par transformée de Fourier discrète du signal d'origine x(n) et du signal décodé x''(n) obtenu après la mise en oeuvre de l'étape 102. Le traitement par transformée de Fourier discrète est effectué par transformée de Fourier discrète de taille P, avec P < N, et l'expression de la distance euclidienne minimale s'écrit :${\text{Min}}_{\text{i}} \text{[} \text{k=0} \text{N/2} {\text{|X(k)-g.Hj(k).X''(k)|}}^{\text{2}} \text{]}$

Le gain optimal g est alors donné par la relation :$\text{g = Num(j)/Dem(j).}$

Le filtre, ou gabarit optimal Hj, est alors celui qui est obtenu lorsque l'expression Num²(j)/Dem(j) est maximale. L'étape 1030 de calcul de la distance euclidienne est donc suivie des étapes 1031 et 1032 permettant, d'une part, le calcul du gain optimal et, d'autre part, le choix du filtre optimal correspondant.

On notera que dans les relations 2 et 3 précédentes définissant, d'une part, le gain optimal g et, d'autre part, le filtre optimal Hj, les expressions sont définies par les relations ci-après :$\text{Num(j) =} \text{k=0} \text{N/2} \text{Hj,r(k).( Xr(k).X''r(k)+Xi(k).X''i(k) ) + Hi,j(k).( Xi(k).X''r(k)-Xr(k).X''i(k) )}$ et$\text{Dem(j) =} \text{k=0} \text{N/2} {\text{( Hj,r}}^{\text{2}} {\text{(k)+Hj,i}}^{\text{2}} {\text{(k) ).( X''r}}^{\text{2}} {\text{(k)+X''i}}^{\text{2}} \text{(k) )}$

Dans les expressions précitées,
Xr(k) et X''r(k) sont les parties réelles de X(k), respectivement X''(k), Xi(k) et X''i(k) en étant les parties imaginaires.

De même,
Hj,r et Hj,i sont les parties réelles et imaginaires de la fonction de transfert ou gabarit optimal Hj.

L'étape 1032 précédente est alors suivie, ainsi que représenté en figure 2b, d'une étape de mémorisation du gain g et du numéro de filtre j optimal correspondant. Les valeurs de gain g(j), soit la valeur g correspondante et de gabarit de filtrage, sont repérées et mémorisées par leur adresse.

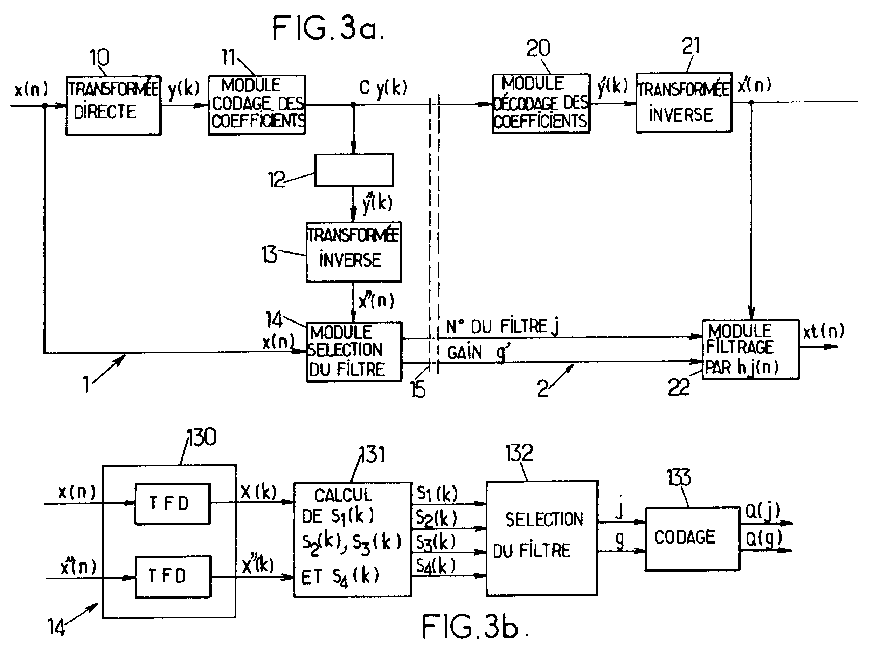

Une description plus détaillée d'un système de traitement des prééchos d'un signal audio-numérique conforme à l'objet de la présente invention, sera maintenant donnée en liaison avec les figures 3a et suivantes.

Ainsi qu'on l'a représenté en figure 3a, le dispositif codeur 1 comprend un module 10 de traitement par transformée fréquentielle en coefficient y(k) du signal suite d'échantillons x(n) d'origine. Ce module de traitement par transformée directe fréquentielle de type TCDM, par exemple, ne sera pas décrit, car il correspond à un module classique. Le codeur comporte en outre un module 11 de codage de ces coefficients pour assurer la transmission des coefficients codés Cy(k). Le système objet de la présente invention comporte également, au niveau du décodeur 2, un module 20 de décodage des coefficients codés transmis Cy(k) en coefficients y'(k) et un module 21 de traitement par transformée fréquentielle inverse, TCDM inverse, par exemple, pour engendrer le signal d'origine après transmission x'(n).

Conformément à un aspect avantageux du système objet de la présente invention, celui-ci comporte, en outre, au niveau du dispositif codeur en aval du module de codage 11 un module 12 de décodage des coefficients codés délivrant des coefficients estimés y''(k), un module 13 de traitement par transformée fréquentielle inverse des coefficients estimés y''(k) pour engendrer le signal décodé x''(n). Les modules 12 de décodage et 13 de traitement par transformée fréquentielle inverse, TCDM inverse, ne seront pas décrits, car ils correspondent exactement au module 20, respectivement 21, au niveau du décodeur, ces modules étant connus de l'art antérieur.

Ainsi qu'on le notera à l'observation de la figure 3a, le codeur 1 comporte également un module 14 de sélection des paramètres optimaux du filtrage et de mémorisation des paramètres de filtrage adapté, gain g(j) et gabarit Hj(f), du filtrage adapté considéré. Enfin, un circuit de multiplexage 15 permet d'assurer un multiplexage temporel des coefficients codés Cy(k) et des paramètres de filtrage numéro j du filtre optimal retenu et du gain g optimal correspondant vers le dispositif décodeur 2.

Le dispositif décodeur 2 comporte un module de filtrage 22. D'une manière générale, le module de filtrage 22 comprend avantageusement un circuit de filtrage comportant une pluralité de modules de filtrage élémentaires présentant des paramètres de filtrage déterminés distincts, et un circuit d'adressage à partir des paramètres de filtrage adapté reçus g et hj du module de filtrage adapté correspondant. Ce module de filtrage adapté reçoit le signal d'origine après transmission x'(n) et délivre le signal d'origine après transmission et traitement xt(n).

Le système de traitement des prééchos d'un signal audio-numérique, objet de l'invention, tel que représenté en figure 3a opère, conformément au procédé tel que décrit précédemment dans la description, la transmission simultanée des coefficients de transformée Cy(k) et des paramètres de filtrage, numéro du filtre j et gain optimal g de celui-ci, étant assurée par l'intermédiaire du circuit de multiplexage 15 et de circuits de transmission correspondants, lesquels ne seront pas décrits, ces circuits correspondant à des circuits de l'art antérieur parfaitement connus de l'homme de métier.

Le module de filtrage 22 au décodeur 2 permet alors, par simple adressage des valeurs de gabarit de filtrage mémorisées et à partir des valeurs de gain, de réaliser le traitement par filtrage du signal d'origine après transmission x'(n) pour restituer le signal d'origine après transmission et traitement xt(n).

Une description plus détaillée d'un mode de réalisation avantageux du module de sélection du filtre 14 représenté en figure 3a sera donnée en liaison avec la figure 3b. On notera que ce mode de réalisation permet bien entendu un traitement en temps réel du signal d'origine x(n) et donc la transmission des coefficients de transformée Cy(k) et des paramètres de filtrage avec un retard au plus égal à une période d'échantillonage du signal d'origine. Ainsi qu'on l'a représenté en figure 3b, le module 14 de sélection des paramètres optimaux du filtre et de mémorisation des paramètres de filtrage adapté, gain g(j) et gabarit Hj(f) du filtrage adapté, comprend un sous-module 130 de traitement par transformée de Fourier discrète TFD sur P échantillons, avec P < N du signal d'origine x(n) et du signal décodé x''(n).

Ainsi, le sous-module 130 délivre respectivement les coefficients de transformée de Fourier directe X(k) et X''(k). On notera que les signaux de transformée de Fourier directe délivrés sont en fait les signaux Xr(k), Xi(k) avec $\text{k = 0,...,P/2-1}$, et X'r(k), X''i(k) avec $\text{k = 0,...,P/2-1}$. Les indices r et j désignent ici les parties réelles et imaginaires des transformées de Fourier directes précitées pour les signaux d'origine et signaux décodés correspondants. On notera bien sûr que le calcul de la transformée de Fourier discrète peut être réalisé au moyen des circuits bien connus de transformée de Fourier rapide FFT.

En outre, ainsi qu'on l'a représenté en figure 3b, le module de sélection des paramètres optimaux du filtre comprend un sous-module 131 de calcul de valeurs remarquables S1(k), S2(k), S3(k), et S4(k) à partir des coefficients de transformée X(k) et X''(k). On notera que les valeurs remarquables précitées sont représentatives de l'énergie et de la distribution d'énergie du signal d'origine et du signal décodé dans les P échantillons pris en considération, indépendamment des filtres ou gabarits de filtrage considérés. On notera également que cette indépendance résulte du modèle retenu pour les réponses en fréquence. Ainsi, le calcul des valeurs remarquables précitées peut donc être fait préalablement à la procédure de sélection des modules de filtrage et n'a donc pas besoin d'être réalisé pour chacun des M modules de filtrage constituant l'ensemble de modules de filtrage dans lequel le filtre optimal est choisi, ce qui permet de réduire fortement la charge de calcul.

En outre, le module de sélection des paramètres optimaux du filtre 13 comporte ensuite un sous-module 132 de sélection des modules de filtrage, lequel reçoit en entrée les valeurs remarquables précitées et délivre les paramètres de filtrage adapté, gain g(j) et gabarit Hj(f) du filtrage adapté, ces paramètres étant délivrés sous forme du numéro j du module de filtrage retenu et de valeur de gain g correspondante. Enfin, un module de codage 133 est prévu, lequel permet de délivrer des coefficients codés correspondants Q(j) et Q(g), lesquels peuvent être transmis pour transmission par le multiplexeur 15 vers le décodeur 2.

Selon une caractéristique avantageuse du sous-module 131 de calcul des valeurs remarquables, celui-ci permet de calculer les valeurs remarquables ci-après vérifiant les relations :$\begin{matrix}\begin{matrix}\begin{matrix}{\text{S1(k) = (X''r(k))}}^{\text{2}} {\text{+(X''i(k))}}^{\text{2}}\end{matrix} \\ \begin{matrix}\text{S2(k) = Xr(k).X''r(k)+Xi(k).X''i(k)}\end{matrix} \\ \begin{matrix}\text{S3(k) = S3(k-1)+S1(k)}\end{matrix} \\ \begin{matrix}\text{S4(k) = S4(k-1)+S2(k)}\end{matrix}\end{matrix}\end{matrix}$

On notera que ces valeurs sont toutes calculées pour $\text{k = 0,...,P/2-1}$, avec S3(0) = 0 et S4(0) = 0.

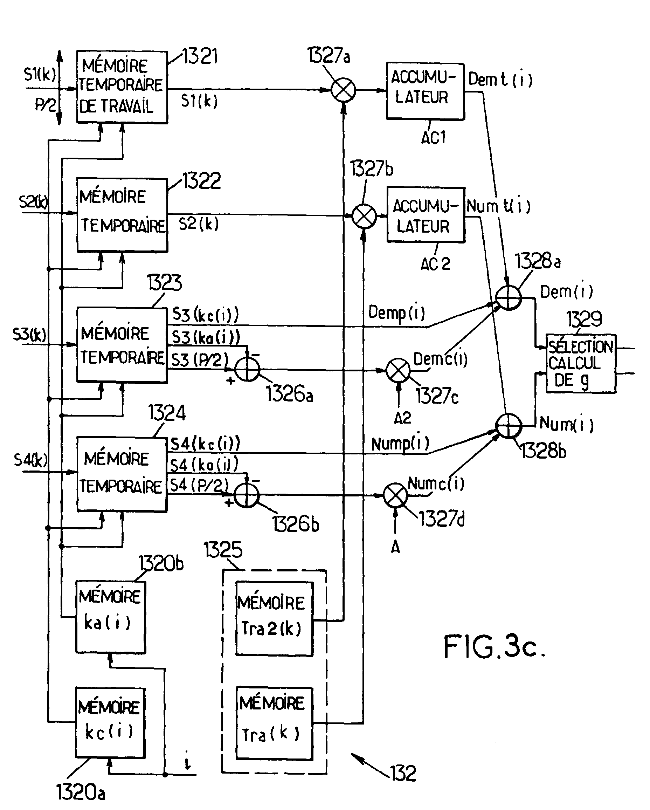

Une description plus détaillée du sous-module de sélection des modules de filtrage 132 représenté en figure 3b sera donnée en liaison avec la figure 3c.

D'une manière générale, le sous-module de sélection des modules de filtrage effectue essentiellement le calcul de deux valeurs numériques notées Num(i) et Dem(i) et permet d'effectuer la recherche du gabarit ou filtre Hj permettant d'obtenir un rapport Num²(j)/Dem(j) maximum.

D'une manière générale, les caractéristiques de gabarit des modules de filtrage peuvent être déterminées compte tenu des remarques ci-après relativement aux modalités de filtrage effectif des signaux considérés.

Afin de suivre d'éventuelles non stationnarités du signal d'origine x(n), le bloc de transformée de N échantillons à traiter délivrés par le module de traitement 130 de la figure 3b peut être subdivisé en sous-blocs de P points avec P < N, pour effectuer sur chaque sous-bloc un calcul séparé pour la sélection du module de filtrage considéré. Dans un exemple de réalisation, pour un bloc de N = 1024 échantillons, celui-ci peut être divisé en quatre sous-blocs de P = 256 échantillons. Il existe donc ainsi quatre valeurs de gain g et quatre numéros de filtre j à transmettre.

Une description plus détaillée du processus de sélection de filtre sera donnée ci-après relativement à un sous-bloc de taille P, les traitements étant identiques pour chacun des sous-blocs successifs.

Les modules de filtrage hi(n) sont des filtres à réponse impulsionnelle finie et symétrique. Ces modules de filtrage constituent donc des filtres à phase nulle et les relations 4 et 5 précédentes deviennent :$\text{Num(j) =} \text{k=0} \text{N/2} \text{Hj,r(k).( Xr(k).X''r(k)+Xi(k).X''i(k) )}$ et$\text{Dem(j) =} \text{k=0} \text{N/2} {\text{Hj,r}}^{\text{2}} {\text{(k).( X''r}}^{\text{2}} {\text{(k)+X''i}}^{\text{2}} \text{(k) )}$

Les modules de filtrage correspondants sont des modules filtre passe-bas, dont seule la fréquence de coupure change.

Pour une fréquence d'échantillonnage de 48 kHz du signal audio-numérique d'origine, les paramètres suivants peuvent être retenus à titre d'exemple : le nombre de modules de filtrage retenu est par exemple M = 32, et la longueur de leur réponse impulsionnelle est L = 49, cette longueur étant mesurée en durée d'échantillons.

Ces modules de filtrage sont définis par la réponse en fréquence ci-après : $\text{Hi,r(f) = 1,0}$ pour f < fc(i), soit dans la bande passante, $\text{Hi,r(f) = A}$ pour f > fa(i), soit dans la bande atténuée.

En terme de coefficient de transformée de Fourier discrète : $\text{Hi,r(k) = 1,0}$ pour k < kc(i), $\text{Hi,r(k) = A}$ pour k > ka(i).

Pour 60 dB d'atténuation, le coefficient A vaut 0,001 et la bande de transition, soit kc(i) < k < ka(i), est la même pour tous les modules de filtrage.

Pour chacun des modules de filtrage précédemment définis, les trois parties élémentaires de la réponse en fréquence sont identiques et seule la limite de la bande passante change, soit kc(i), et par conséquent celle de la bande atténuée ka(i).

On notera bien sûr que la décomposition du gabarit ou de la fonction de transfert Hi,r de chaque module de filtrage en ces trois parties élémentaires permet de simplifier sensiblement le calcul des paramètres Num(i) et Dem(i) nécessaires à la sélection du rang j du module de filtrage considéré et de la valeur de gain g correspondante.

On notera que les M fréquences de coupure des modules de filtrage fc(i) peuvent être déterminées en fonction de divers critères, par exemple, une répartition logarithmique sur l'échelle des fréquences. Les M réponses en fréquence étant fixées, des procédures connues de l'état de la technique pour réaliser le calcul des filtres peuvent être utilisées afin de déterminer les réponses impulsionnelles, lesquelles sont stockées en mémoire au niveau du décodeur.

Sur la figure 3c, on a représenté un agencement particulier du module de sélection de filtre dans un mode de réalisation avantageux non limitatif.

Ainsi que représenté sur la figure précitée, le module 132 de sélection des modules de filtrage comporte avantageusement une pluralité de quatre blocs de mémorisation 1321, 1322, 1323, 1324 de type mémoire vive, ces blocs étant destinés à recevoir et mémoriser les valeurs remarquables S1(k), S2(k), S3(k), S4(k) délivrées par le sous-module 131 de calcul ce celles-ci. Chaque bloc de mémorisation, de manière classique, est adressable en lecture en fonction des adresses physiques j des modules de filtrage et, bien entendu, des valeurs kc(i) et ka(i) définissant la subdivision de ces derniers en bandes passantes, bandes de transition et bandes atténuées ainsi que mentionné précédemment. On notera que les blocs de mémorisation précités délivrent chacun en leur sortie les valeurs remarquables pour le module de filtrage considéré, suite à adressage correspondant, les blocs de mémorisation 1321, 1322 délivrant les valeurs S1(k) respectivement S2(k) pour k appartenant à [kc(i), ka(i)], alors que les blocs de mémorisation 1323, 1324 délivrent la valeur remarquable S3 respectivement S4 pour la valeur de k respectivement égale à kc(i), ka(i), $\text{k = P/2}$. On notera bien sûr, ainsi que représenté sur la figure 3c, que les valeurs correspondantes de k sont obtenues à partir de mémoires 1320a, 1320b, lesquelles sont adressées par la valeur courante i représentant le numéro du module de filtrage considéré. Les mémoires 1320a, 1320b, peuvent être constituées par des mémoires de type mémoire morte.

En outre, ainsi que représenté sur la figure 3c, le sous-module de sélection de filtre comprend un circuit de mémorisation 1325 d'un tableau de valeurs Tra(k) et Tra2(k), ces valeurs étant représentatives de la réponse en fréquence de référence de la bande de transition. En outre, deux circuits soustracteurs 1326a et 1326b, reçoivent de la sortie des troisième et quatrième blocs de mémorisation, les valeurs remarquables S3(P/2) et S3(ka(i)) respectivement S4(P/2) et S4(ka(i)), et délivrent chacun la différence $\text{S3(P/2)-S3(ka(i))}$, et respectivement $\text{S4(P/2)-S4(ka(i))}$.

Le sous-module de sélection de filtre comporte également une pluralité de 4 circuits multiplicateurs, notés 1327a à d. Le premier circuit multiplicateur 1327a reçoit, d'une part, la valeur remarquable S1(k) délivrée par le premier bloc de mémorisation et, d'autre part, la valeur Tra2(k) délivrée par le circuit de mémorisation 1325. Ce premier circuit multiplicateur délivre le produit S1(k).Tra2(k).

Le deuxième circuit multiplicateur 1327b reçoit, d'une part, la valeur remarquable S2(k) délivrée par le deuxième bloc de mémorisation 1322 et, d'autre part, la valeur Tra(k) du tableau de valeurs délivrées par le circuit de mémorisation 1325 et délivre le produit S2(k).Tra(k).

Le troisième circuit multiplicateur 1327c reçoit, d'une part, la différence $\text{S3(P/2)-S3(ka(i))}$ délivrée par le premier soustracteur 1326a et, d'autre part, une valeur constante référencée A2. Cette valeur A2 est égale à une valeur A², la valeur A représentant le niveau de la réponse en fréquence dans la bande coupée. Le troisième multiplicateur 1327c délivre le produit $\text{A2.( S3(P/2)-S3(ka(i)) )}$.

Enfin, le quatrième circuit multiplicateur 1327d reçoit, d'une part, la différence $\text{S4(P/2)-S4(ka(i))}$ délivrée par le deuxième soustracteur 1326b et, d'autre part, la valeur constante A précitée. Il délivre le produit $\text{A.( S4(P/2)-S4(ka(i)) )}$.

Enfin, ainsi qu'on l'observera sur la figure 3c, un premier et un deuxième circuits sommateurs 1328a, 1328b sont prévus. Le premier circuit sommateur 1328a reçoit, d'une première part, par l'intermédiaire d'un circuit accumulateur, noté AC1, la valeur cumulée Demt(i) des produits délivrés par le premier multiplicateur 1327a, d'une deuxième part, la valeur Demp(i) égale à la valeur remarquable S3(kc(i)) délivrée par le troisième bloc de mémorisation 1323 et, d'une troisième part, le produit Demc(i) délivré par le troisième multiplicateur 1327c. Le premier sommateur 1328a délivre la somme Dem(i) correspondante.

Le deuxième circuit sommateur 1328b reçoit, d'une première part, par l'intermédiaire d'un circuit accumulateur AC2, la valeur cumulée Numt(i) délivrée par le deuxième multiplicateur, d'une deuxième part, la valeur $\text{Nump(i) = S4(kc(i))}$ délivrée par le quatrième bloc de mémorisation 1324 et, d'une troisième part, la valeur Numc(i) délivrée par le quatrième multiplicateur. Il délivre la somme Num(i) correspondante. Les sommes correspondantes Dem(i) et Num(i) délivrées par le premier respectivement le deuxième sommateur 1328a, 1328b, sont délivrés à un circuit 1324 de sélection du gain $\text{g(i) = Num(i)/Dem(i)}$ et du filtre optimal Hj pour Num²(i)/Dem(i) maximum.

Le fonctionnement du sous-module de sélection de filtrage 132 représenté en figure 3c est alors le suivant :

Compte tenu du type de réponse en fréquence des modules de filtrage et de la décomposition de cette réponse en trois parties élémentaires identiques quant à leur forme pour tous les modules de filtrage, les valeurs Num(i) et Dem(i) délivrées au circuit 1329 de sélection du gain et du gabarit de filtrage optimal sont obtenues de la façon ci-après :
- Dans la bande passante :$\begin{matrix}\begin{matrix}\begin{matrix}\text{Demp(i) = S3(kc(i)}\end{matrix} \\ \begin{matrix}\text{Nump(i) = S4(kc(i)}\end{matrix}\end{matrix}\end{matrix}$
- Dans la bande de transition :$\begin{matrix}\begin{matrix}\begin{matrix}\text{Demt(i) =} \text{k=kc(i)} \text{ka(i)} \text{S1(k).Tra2(k-kc(i))}\end{matrix} \\ \begin{matrix}\text{Numt(i) =} \text{k=kc(i)} \text{ka(i)} \text{S2(k).Tra(k-kc(i))}\end{matrix}\end{matrix}\end{matrix}$

On notera qu'en ce qui concerne les valeurs Tra(k) délivrées par le circuit de mémorisation 1325, que celles-ci correspondent à la réponse en fréquence de référence de la bande de transition, cette valeur de référence est supposée être la même pour tous les modules de filtrage.

Les valeurs Tra2(k) sont les valeurs précédentes de Tra(k) élevées au carré. Le circuit de mémorisation 1325 peut d'ailleurs être constitué par une mémoire morte, par exemple.

Dans la bande atténuée :$\begin{matrix}\begin{matrix}\begin{matrix}\text{Demc(i) = A2.( S3(P/2)-S3(ka(i)) )}\end{matrix} \\ \begin{matrix}\text{Numc(i) = A.( S4(P/2)-S4(ka(i)) ).}\end{matrix}\end{matrix}\end{matrix}$

Les valeurs délivrées par les sommateurs 1328a et 1328b utilisées par le circuit 1329 de sélection du gain sont finalement obtenues par :$\begin{matrix}\begin{matrix}\begin{matrix}\text{Dem(i) = Demp(i)+Demt(i)+Demc(i)}\end{matrix} \\ \begin{matrix}\text{Num(i) = Nump(i)+Numt(i)+Numc(i).}\end{matrix}\end{matrix}\end{matrix}$

Pour chacun des modules de filtrage, c'est-à-dire pour chaque valeur d'indice i, le circuit 1329 de sélection du gain vérifie si le critère Num²(i)/Dem(i) maximum est vérifié. Dans l'affirmative, les valeurs Num(j) et Dem(j) sont conservées, la valeur du gain g(j) correspondante est mémorisée, ainsi que la valeur j correspondante précitée.

A la fin de l'examen de tous les modules de filtrage, c'est-à-dire à la fin de l'itération sur la valeur de i, i appartenant à [0,M-1], il est alors possible de calculer le gain g, ce gain étant ensuite quantifié par le module de codage 133 représenté en figure 3b. Bien entendu, cette quantification peut être effectuée directement à partir des valeurs de Num(j) et Dem(j). On indiquera à titre d'exemple non limitatif que le module de codage 133 peut consister en un quantificateur uniforme à 4 bits de dynamique [0,2]. On indiquera également que l'indice j du filtre optimal peut quant à lui être transmis sur log2(M)bits.

On notera enfin, en ce qui concerne le système de traitement des prééchos objet de la présente invention tel que représenté en figure 3a, qu'au niveau du décodeur 2, les traitements à effectuer comportent la lecture de la réponse impulsionnelle hj(n) dans une mémoire de M éléments. L'adresse de la réponse impulsionnelle hj(n) correspondante est donnée simplement par l'indice j reçu suite à la transmission et le filtrage effectué au niveau du module de filtrage 22, la réponse impulsionnelle précitée étant multipliée par le gain déquantifié. Le gain déquantifié est considéré correspondre au gain g transmis pendant le processus de transmission.

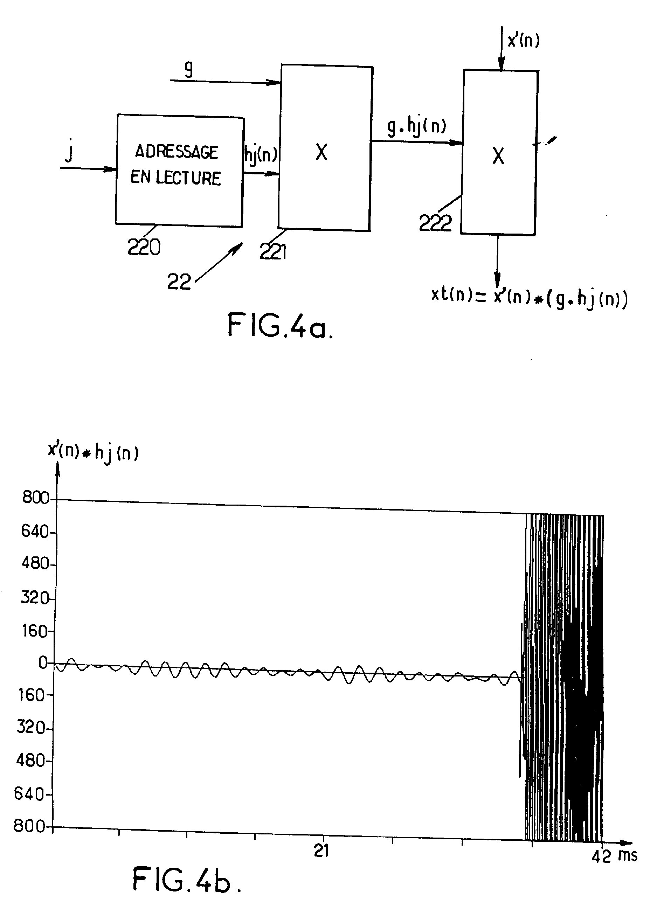

Le module de filtrage tel que représenté en figure 4a peut comprendre un module d'adressage en lecture 220, lequel, à partir de la valeur de j transmise, permet d'obtenir la réponse impulsionnelle hj(n) du filtre. Un premier module multiplicateur 221 recevant la réponse impulsionnelle hi(n) du filtre et la valeur de gain g déquantifiée délivre le produit g.hj(n) à un deuxième module multiplicateur 222, lequel délivre le produit de convolution $\text{xt(n) = x'(n)*(g.hj(n))}$ constituant le signal d'origine après transmission et traitement.

La figure 4b représente le résultat de la mise en oeuvre du procédé objet de la présente invention sur un signal siège d'un phénomène de préécho ainsi que représenté en figure 1c. A l'observation de la figure 4b précitée, on constate que le bruit de préécho est supprimé et que la forme d'onde restituée, soit $\text{xt(n) = x'(n)*(g.hj(n))}$ est très proche du signal d'origine.

On a ainsi décrit un procédé et un dispositif de filtrage pour la réduction des prééchos d'un signal audio-numérique particulièrement performant dans la mesure où un fonctionnement tout à fait satisfaisant a été obtenu sur de nombreux types de signaux affectés de prééchos. En outre, le procédé et le dispositif objets de la présente invention sont particulièrement simples à mettre en oeuvre, en particulier au niveau du décodeur où le traitement, c'est-à-dire le filtrage, est réduit et correspond ainsi aux possibilités offertes.

## Revendications

1. Procédé de traitement des prééchos d'un signal audio-numérique d'origine, suite d'échantillons x(n) constitués en blocs de N échantillons, codés selon un processus de codage puis décodés selon un processus de décodage, le processus de codage consistant en une étape de traitement par transformée fréquentielle en coefficients y(k) suivie d'une étape de codage de ces coefficients pour assurer la transmission de coefficients codés Cy(k), et le processus de décodage consistant en une étape de décodage des coefficients codés transmis en coefficients y'(k) suivie d'une étape de traitement par transformée fréquentielle inverse pour engendrer un signal d'origine après transmission x'(n), caractérisé en ce que ledit procédé consiste en outre, au cours du processus de codage, suite à l'étape de codage des coefficients pour transmission des coefficients codés :
- à effectuer une étape de décodage des coefficients codés Cy(k) pour engendrer des coefficients estimés y''(k) puis de traitement par transformée fréquentielle inverse desdits coefficients estimés y''(k) pour engendrer un signal décodé x''(n),
- à déterminer le gabarit optimal de filtrage parmi un ensemble de gabarits de filtrage donné et les paramètres de gain dudit filtrage associé en vue de reconstituer ledit signal d'origine x(n), le gabarit optimal de filtrage et les paramètres de gain étant choisis de façon que le produit de convolution x''(n)*hj(n) du signal décodé x''(n) et de la réponse impulsionnelle hj(n) du filtre soit le plus proche du signal d'origine x(n), le filtre choisi réalisant un filtrage adapté au signal d'origine,
- à transmettre simultanément vers le processus de décodage lesdits coefficients codés Cy(k) et les paramètres de gain et de gabarit optimal de filtrage, puis au cours du processus de décodage,
- à effectuer, après l'étape de décodage des coefficients transmis et l'étape de traitement par transformée fréquentielle inverse pour engendrer le signal d'origine après transmission x'(n), ledit filtrage adapté dudit signal d'origine après transmission x'(n) pour engendrer ledit signal d'origine après transmission et traitement xt(n).

2. Procédé selon la revendication 1, caractérisé en ce que ladite étape consistant à déterminer les paramètres de gain et de gabarit dudit filtrage consiste :
- à effectuer une transformée de Fourier dudit signal d'origine x(n) pour obtenir le spectre fréquentiel X(f) de celui-ci,
- à effectuer une transformée de Fourier dudit signal décodé x''(n) pour obtenir le spectre fréquentiel X''(f) ce celui-ci,
- à déterminer, à partir d'un ensemble de valeurs de gain g(j) et d'un ensemble de gabarits de filtrage, de fonction de transfert Hj(f) dans le domaine de fréquence, le produit de filtrage $\text{P(f) = g(j)Hj(f).X''(f)}$ dudit spectre fréquentiel X''(f) dudit signal décodé,
- à déterminer la distance euclidienne minimale d(X(f),P(f)) du spectre fréquentiel du signal d'origine et dudit produit de filtrage et à mémoriser les valeurs correspondantes de gain g(j) et de gabarit de filtrage Hj(f) constituant lesdits paramètres de gain et de gabarit optimal de filtrage.

3. Procédé selon la revendication 2, caractérisé en ce que lesdites valeurs de gain g(j) et de gabarit de filtrage formant lesdits ensemble de valeurs de gain et ensemble de gabarits de filtrage sont repérées et mémorisées par leur adresse.

4. Système de traitement des prééchos d'un signal audio-numérique d'origine, suite d'échantillons x(n) constitués en blocs de N échantillons successifs, transmis entre un dispositif codeur (1) et un dispositif décodeur (2), le dispositif codeur (1) comportant un module (10) de traitement par transformée fréquentielle en coefficients y(k) et un module (11) de codage de ces coefficients pour assurer la transmission des coefficients codés et le dispositif de décodage (2) comportant un module (20) de décodage des coefficients codés transmis en coefficients y'(k) et un module (21) de traitement par transformée fréquentielle inverse pour engendrer un signal d'origine après transmission x'(n), caractérisé en ce que ledit système comporte en outre au niveau du dispositif codeur (1), en aval dudit module (11) de codage :
- un module (12) de décodage des coefficients codés Cy(k) délivrant des coefficients estimés, y''(k),
- un module (13) de traitement par transformée fréquentielle inverse desdits coefficients estimés y''(k) pour engendrer un signal décodé x''(n),
- un module (14) de sélection, parmi plusieurs gabarits de filtrage, des paramètres optimaux du filtrage et de mémorisation des paramètres de filtrage adapté, gain g(j) et gabarit optimal de filtrage, le gabarit optimal de filtrage et les paramètres de gain étant choisis de façon que le produit de convolution x''(n)*hj(n) du signal décodé x''(n) et de la réponse impulsionnelle hj(n) du filtre soit le plus proche du signal d'origine x(n), le filtre choisi réalisant un filtrage adapté au signal d'origine,
- des moyens (15) de multiplexage temporel desdits coefficients codés et desdits paramètres de filtrage adapté pour assurer leur transmission simultanée vers ledit dispositif décodeur.

5. Système selon la revendication 4, caractérisé en ce que ledit module de sélection des paramètres optimaux du filtrage et de mémorisation des paramètres de filtrage adapté, gain g(j) et gabarit Hj(f) optimal de filtrage, comprend :
- un sous-module (130) de traitement par transformée de Fourier discrète (TFD) sur P échantillons avec P < N, dudit signal d'origine x(n) et dudit signal décodé x''(n), ledit sous-module délivrant respectivement les coefficients de transformée correspondants X(k), X''(k),
- un sous-module (131) de calcul de valeurs remarquables S1(k), S2(k), S3(k), S4(k), avec $\text{k ε [0, P/2-1]}$ à partir desdits coefficients de transformée X(k) et X''(k), lesdites valeurs remarquables étant représentatives de l'énergie et de la distribution d'énergie dans les P échantillons pris en considération, indépendamment des gabarits de filtrage,
- un sous-module (132) de sélection des gabarits de filtrage recevant en entrée lesdites valeurs remarquables S1(k), S2(k), S3(k), S4(k), et délivrant les paramètres de filtrage adapté gain g(j) et gabarit Hj(f) optimal de filtrage, ces paramètres étant délivrés sous forme du numéro j du gabarit de filtrage et de valeur de gain g(j) correspondante.

6. Système selon la revendication 5, caractérisé en ce que ledit sous-module de sélection des gabarits de filtrage comporte :
- un ensemble de quatre blocs de mémorisation (1321 à 1324), de type mémoire vive, destinée à recevoir et mémoriser lesdites valeurs remarquables S1(k), S2(k), S3(k), S4(k), chaque bloc de mémorisation étant adressable en lecture en fonction des adresses physiques i des modules de filtrage, et délivrant chacun en leur sortie lesdites valeurs remarquables pour le module de filtrage considéré,
- des moyens (1325) de mémorisation d'un tableau de valeurs Tra(k), Tra2(k), représentatives de la réponse en fréquence de référence de la bande de transition,
- des moyens soustracteurs (1326a, 1326b) recevant de la sortie des troisième et quatrième bloc de mémorisation les valeurs remarquables S3(P/2) et S3(ka(i)) respectivement S4(P/2) et S4(ka(i)) et délivrant chacun la différence ($\text{S3(P/2)-S3(ka(i))}$) respectivement ($\text{S4(P/2)-S4(ka (i))}$),
- un ensemble de quatre circuits multiplicateurs (1327a à d), le premier circuit multiplicateur recevant, d'une part, la valeur remarquable S1(k) délivrée par le premier bloc de mémorisation et, d'autre part, la valeur Tra2(k) du tableau de valeurs délivrée par les moyens de mémorisation et délivrant le produit S1(k).Tra2(k), le deuxième circuit multiplicateur recevant, d'une part, la valeur remarquable S2(k), délivrée par le deuxième bloc de mémorisation et, d'autre part, la valeur Tra(k) du tableau de valeurs délivrée par les moyens de mémorisation et délivrant le produit S2(k).Tra(k), le troisième circuit multiplicateur recevant, d'une part, la différence ($\text{S3(P/2)-S3(ka(i))}$) délivrée par le premier soustracteur et, d'autre part, une valeur constante ${\text{A2 = A}}^{\text{2}}$, où A représente le niveau de la réponse en fréquence dans la bande coupée et délivrant le produit $\text{Demc(i) = A2.( S3(P/2) - S3(ka(i)) )}$, le quatrième circuit multiplicateur recevant, d'une part, la différence ($\text{S4(P/2) - S4ka(i)}$) délivrée par le deuxième soustracteur et, d'autre part, la valeur constante A, et délivrant le produit $\text{Numc(i) = A.( S4(P/2) - S4(ka(i)) )}$,
- un premier circuit sommateur (1328a) recevant, d'une première part, par l'intermédiaire d'un circuit accumulateur (AC1) la valeur cumulée (Demt(i)) des produits délivrés par le premier multiplicateur, d'une deuxième part, la valeur $\text{Demp(i) = S3(kc(i))}$ délivrée par le troisième bloc de mémorisation et, d'une troisième part, le produit Demc(i) délivré par le troisième multiplicateur et délivrant la somme Dem(i) correspondante, et,
- un deuxième circuit sommateur (1328b) recevant, d'une première part, par l'intermédiaire d'un circuit accumulateur (AC2), la valeur cumulée Numt(i) délivrée par le circuit accumulateur, d'une deuxième part, la valeur $\text{Nump(i) = S4(kc(i))}$ délivrée par le quatrième bloc de mémorisation et, d'une troisième part, le produit Numc(i) délivré par le quatrième multiplicateur et délivrant 1a somme Num(i) correspondante, et
- un circuit (1329) de sélection du gain$\text{g(i) =} \frac{\text{Num(i)}}{\text{Dem(i)}}$ et du filtre optimal H(j) pour Num²(j)/Dem(j) maximal.

7. Système selon la revendication 4, caractérisé en ce que celui-ci comporte, en outre, au niveau du dispositif décodeur,
- des moyens de filtrage comportant une pluralité de modules de filtrage élémentaires présentant des paramètres de filtrage déterminés distincts,
- des moyens d'adressage à partir desdits paramètres de filtrage adapté reçus, du module de filtrage adapté correspondant, ledit module de filtrage adapté recevant ledit signal d'origine après transmission x'(n) et délivrant ledit signal d'origine après transmission et traitement xt(n).

8. Système selon la revendication 7, caractérisé en ce que chaque module de filtrage élémentaire est défini par ses paramètres de filtrage, valeurs de gain g(i) et de gabarit de filtrage, repérés et mémorisées par leur adresse.

## Claims

1. A method for processing the preechoes of an original digital audio signal, sequence of samples x(n) consisting of blocks of N samples, transmitted after a process of coding then decoded through a decoding process, the coding process consisting of a step for processing by frequency transform as coefficients y(k) followed by a step for coding these coefficients to provide for the transmission of coded coefficients Cy(k), and the decoding process consisting of a step for decoding the transmitted coded coefficients as coefficients y'(k) followed by a step for processing by inverse frequency transform to recreate the post-transmission original signal x'(n), characterized in that said method furthermore consists, during the coding process, after the step for coding the coefficients for transmission of the coded coefficients:
- in performing a step for decoding the coded coefficients Cy(k) to generate estimated coefficients y''(k) and for processing said estimated coefficients by inverse frequency transform to generate a decoded signal x''(n),
- in determining the optimal filtering template from a given set of filtering templates and the gain parameters of said associated filtering in order to recreate said original signal x(n), the optimal filtering template and the gain parameters being selected so that the convolution product x''(n)*hj(n) of the decoded signal x''(n) and the filter impulse response hj(n) is closest to the original signal x(n), the selected filter performing thus a filtering adapted to the original signal;
- in simultaneously transmitting to the decoding process said coded coefficients Cy(k) and said gain and matched filtering template parameters, then during the decoding process,
- in performing, after the step for decoding the transmitted coefficients and the step for processing by inverse frequency transform to generate the post-transmission original signal x'(n), said matched filtering of said post-transmission original signal x'(n) to recreate said post-transmission and post-processed orginal signal xt(n).

2. The method as claimed in claim 1, characterized in that said step consisting in determining the gain and template parameters of said filtering consists:
- in performing a Fourier transform of said original signal x(n) to obtain the frequency spectrum X(f) of the latter,
- in performing a Fourier transform of said decoded signal x''(n) to obtain the frequency spectrum X''(f) of the latter,
- in determining, from a set of values of gain g(j) and from a set of filtering templates, with transfer function Hj(f) in the frequency domain, the filtering product $\text{P(f) = g(j)Hj(f).X''(f)}$ of said frequency spectrum x''(f) of said decoded signal,
- in determining the minimum Euclidean distance d(X(f),P(f)) of the frequency spectrum of the original signal and of said filtering product and in storing the corresponding values of gain g(j) and of filtering template Hj(f) constituting said gain and optimal filtering template parameters.

3. The method as claimed in claim 2, characterized in that said values of gain g(j) and of filtering template forming said sets of values of gain and of filtering template are labeled and stored by their address.

4. A system for processing the preechoes of an original digital audio signal, sequence of samples x(n) consisting of blocks of N successive samples, transmitted between a coder device (1) and a decoder device (2), the coder device (1) including a module (10) for processing by frequency transform as coefficients y(k) and a module (11) for coding these coefficients to provide for the transmission of the coded coefficients and the decoding device (2) including a module for decoding the transmitted coded coefficients as coefficients (y'k) and a module (21) for processing by inverse frequency transform to recreate the transmitted original signal x'(n), characterized in that said system furthermore includes at the level of the coder device (1), downstream of said coding module (11):
- a module (12) for decoding the coded coefficients delivering estimated coefficients y''(k),
- a module (13) for processing said estimated coefficients y''(k) by inverse frequency transform to generate the decoded signal x''(n),
- a module (14) for selecting the optimal filtering parameters and for storing the optimal filtering parameters, gain g(j) and optimal filtering template, the optimal filtering template and the gain parameters being selected so that the convolution product x''(n)*hj(n) of the decoded signal x''(n) and the filter impulse response hj(n) is closest to the original signal x(n), the selected filter performing thus a filtering adapted to the original signal;
- means (15) for time-multiplexing said coded coefficients and said optimal filtering parameters to provide for their simultaneous transmission to said decoder device.

5. The system as claimed in claim 4, characterized in that said module for selecting the optimal parameters of the filter and for storing the matched filtering parameters, gain g(j) and optimal filtering template Hj(f) Comprises:
- a sub-module (130) for processing by discrete Fourier transform, DFT, over P samples with P < N, said original signal x(n) and said decoded signal x''(n), said sub-module delivering respectively the corresponding transform coefficients X(k), X''(k),
- a sub-module (131) for computing notable values S1(k), S2(k), S3(k), S4(k), with $\text{k ε [0, P/2-1]}$ from said transform coefficients X(k) and X''(k), said notable values being representative of the energy and of the energy distribution in the P samples taken into consideration, independently of the filtering modules,
- a sub-module (132) for selecting the filtering modules receiving as input said notable values S1(k), S2(k), S3(k), S4(k), and delivering the optimal filtering parameters gain g(j) and optimal filtering template Hj(f), these parameters being delivered in the form of the number j of the filtering template and corresponding value of gain g(j).

6. The system as claimed in claim 5, characterized in that said sub-module for selecting the filtering modules includes:
- a plurality of four storage blocks (1321 to 1324), of random-access memory type, intended for receiving and storing said notable values S1(k), S2 (k), S3 (k), S4(k), each storage block being read-addressable as a function of the physical addresses i of the filtering modules, and each delivering at their output said notable values for the relevant filtering module,
- means (1325) of storing a table of values (Tra(k), Tra2(k)), representative of the reference frequency response of the transition band,
- subtracter means (1326a, 1326b) receiving from the output of the third and fourth storage block the notable values S3(P/2) and S3(ka(i)) respectively S4(P/2) and S4(ka(i)) and each delivering the difference $\text{S3(P/2) - S3(ka(i))}$ respectively S4(P/2) S4(ka(i)),
- a set of four multiplier circuits (1327a to d), the first multiplier circuit receiving, on the one hand, the notable value S1(k) delivered by the first storage block and, on the other hand, the value Tra2(k) from the table of values delivered by the storage means and delivering the product S1(k).Tra2(k), the second multiplier circuit receiving, on the one hand, the notable value S2(k), delivered by the second storage block and, on the other hand, the value Tra (k) from the table of values delivered by the storage means and delivering the product S2(k).Tra(k), the third multiplier circuit receiving, on the one hand, the difference $\text{(S3(P/2)-S3(ka(i))}$ delivered by the first subtracter and, on the other hand, a constant value $\text{A2 = A2}$, where A represents the level of the frequency response in the cut off band and delivering the product $\text{Demc(i) = A2.( S3(P/2)-S3(ka(i)) )}$, the fourth multiplier circuit receiving, on the one hand, the difference ( $\text{S4(P/2)-S4ka(i)}$ ) delivered by the second subtracter and, on the other hand, the constant value A, and delivering the product: $\text{Numc(i) = A.( S4(P/2)-S4(ka(i)) )}$,
- a first summing circuit (1328a) receiving, firstly, by way of an accumulator circuit (AC1) the accumulated value (Demt(i)) of the products delivered by the first multiplier, secondly, the value $\text{Demp(i) = S3(kc(i))}$ delivered by the third storage block and, thirdly, the product Demc(i) delivered by the third multiplier and delivering the corresponding sum Dem, and,
- a second summing circuit (1328b) receiving, firstly, by way of an accumulator circuit (AC2) the accumulated value Numt(i) delivered by the first multiplier, secondly, the value $\text{Nump(i) = S4(kc(i))}$ delivered by the fourth storage block and, thirdly, the product Numc(i) delivered by the fourth multiplier and delivering the corresponding sum Num, and,
- a circuit (1329) for selecting the gain$\text{g(i) =} \frac{\text{Num(i)}}{\text{Dem(i)}}$ and the optimal filter H(j) for maximum Num²(j)/Dem(j).

7. The system as claimed in claim 4, characterized in that said system furthermore includes, at the level of the decoder device,
- filtering means including a plurality of elementary filtering modules having distinct specified filtering parameters,
- means for addressing based on said received matched filtering parameters, the corresponding matched filtering module, said matched filtering module receiving said transmitted original signal x'(n) and delivering said post-transmission and post-processed original signal xt(n).

8. The system as claimed in claim 7, wherein each elementary filtering module is defined by its filtering parameters, values of gain g(i) and of filtering template which are labeled and stored by their address.

## Patentansprüche

1. Verfahren zur Verarbeitung von Vorechos eines ursprünglichen digitalen Audiosignals, einer Abfolge von Abtastproben x(n) bestehend aus Blöcken von N Abtastproben, die gemäß einem Codierverfahren codiert und daraufhin gemäß einem Decodierverfahren decodiert werden, wobei das Codierverfahren aus einem Schritt der Verarbeitung mittels Frequenztransformation in Koeffizienten y(k) besteht, gefolgt von einem Schritt des Codierens dieser Koeffizienten zum Durchführen der Übertragung von codierten Koeffizienten Cy(k), und wobei das Decodierverfahren aus einem Schritt des Decodierens der als Koeffizienten y'(k) übertragenen codierten Koeffizienten besteht, gefolgt von einem Schritt der Verarbeitung mittels umgekehrter Frequenztransformation zum Erzeugen eines ursprünglichen Signals nach Übertragung x'(n), dadurch gekennzeich-. net, daß das Verfahren des weiteren, im Verlauf des Codierverfahrens, im Anschluß an den Schritt des Codierens der Koeffizienten zum Übertragen der codierten Koeffizienten, besteht aus:
- Durchführen eines Schrittes zum Decodieren der codierten Koeffizienten Cy(k) zum Erzeugen der geschätzten Koeffizienten y''(k), daraufhin der Verarbeitung mittels umgekehrter Frequenztransformation der geschätzten Koeffizienten y''(k) zum Erzeugen eines decodierten Signals x''(n),
- Bestimmen des optimalen Filterprofils unter einer gegebenen Gesamtheit von Filterprofilen, sowie der Verstärkungsparameter des zugeordneten Filterns für die Wiederherstellung des ursprünglichen Signals x(n), wobei das optimale Filterprofil und die Verstärkungsparameter derart ausgewählt werden, daß das Faltungsprodukt x''(n)*hj(n) aus dem decodierten Signal x''(n) und der Impulsantwort hj(n) des Filters das dem ursprünglichen Signal x(n) am nächsten kommende ist, wobei das gewählte Filter einen an das ursprüngliche Signal angepaßten Filtervorgang durchführt,
- gleichzeitiges Übertragen der codierten Koeffizienten Cy(k) und der Parameter der Verstärkung und des optimalen Filterprofils zum Decodierverfahren, daraufhin im Verlauf des Decodierverfahrens,
- Durchführen, nach dein Schritt des Decodierens der übertragenen Koeffizienten und dem Schritt der Verarbeitung mittels umgekehrter Frequenztransformation zum Erzeugen des ursprünglichen Signals nach Übertragung x'(n), des angepaßten Filterns des ursprünglichen Signals nach Übertragung x'(n) zum Erzeugen des ursprünglichen Signals nach Übertragung und Verarbeitung xt(n).

2. Verfahren nach Anspruch 1, dadurch gekennzeichnet, daß der Schritt, der darin besteht, die Parameter der Verstärkung und des Profils des Filterns zu bestimmen, besteht aus:
- Durchführen einer Fourier-Transformation des ursprünglichen Signals x(n), um dessen Frequenzspektrum X(f) zu erhalten,
- Durchführen einer Fourier-Transformation des decodierten Signals x''(n), um dessen Frequenzspektrum X''(f) zu erhalten,
- Bestimmen, ausgehend von einer Gesamtheit von Verstärkungswerten g(j) und einer Gesamtheit von Filterprofilen mit der Transferfunktion Hj(f) im Frequenzbereich, des Produkts des Filterns $\text{P(f) = g(j)Hj(f).X''(f)}$ des Frequenzspektrums X''(f) des decodierten Signals,
- Bestimmen des minimalen euklidischen Abstands d(X(f),P(f)) des Frequenzspektrums des ursprünglichen Signals und des Produkts des Filterns, und Speichern der entsprechenden Werte der Verstärkung g(j) und des Filterprofils Hj(f), welche die Parameter der Verstärkung und des optimalen Filterprofils darstellen.

3. Verfahren nach Anspruch 2, dadurch gekennzeichnet, daß die Werte der Verstärkung g(j) und des Filterprofils, welche die Gesamtheit von Verstärkungswerten und Gesamtheit von Filterprofilen darstellen, über ihre Adresse registriert und gespeichert werden.

4. System zum Verarbeiten der Vorechos eines ursprünglichen digitalen Audiosignals, einer Abfolge von Abtastproben x(n) bestehend aus Blöcken von N aufeinanderfolgenden Abtastproben, die zwischen einer Codiervorrichtung (1) und einer Decodiervorrichtung (2) übertragen werden, wobei die Codiervorrichtung (1) aufweist: ein Modul (10) zur Verarbeitung mittels Frequenztransformation in Koeffizienten y(k) und ein Modul (11) zum Codieren dieser Koeffizienten zum Durchführen der Übertragung der codierten Koeffizienten, und die Decodiervorrichtung (2) aufweist: ein Modul (20) zum Decodieren der als Koeffizienten y'(k) übertragenen codierten Koeffizienten und ein Modul (21) zur Verarbeitung mittels umgekehrter Frequenztransformation zum Erzeugen eines ursprünglichen Signals nach Übertragung x'(n), dadurch gekennzeichnet, daß das System des weiteren auf Höhe der Codiervorrichtung (1), stromab von dem Codiermodul (11), aufweist:
- ein Modul (12) zum Decodieren der codierten Koeffizienten Cy(k), welches geschätzte Koeffizienten y''(k) ausgibt,
- ein Modul (13) für die Verarbeitung der geschätzten Koeffizienten y''(k) mittels umgekehrter Frequenztransformation zum Erzeugen eines decodierten Signals x''(n),
- ein Modul (14) zum Auswählen der optimalen Parameter des Filterns unter mehreren Filterprofilen und Speichern der Parameter des angepaßten Filterns, der Verstärkung g(j) und des optimalen Filterprofils, wobei das optimale Filterprofil und die Verstärkungsparameter derart ausgewählt werden, daß das Faltungsprodukt x''(n)*hj(n) aus dem decodierten Signal x''(n) und der Impulsantwort hj(n) des Filters dem ursprünglichen Signal x(n) so nahe wie möglich kommt, wobei das gewählte Filter ein an das ursprüngliche Signal angepaßtes Filtern durchführt,
- Einrichtungen (15) zum Zeitmultiplexieren der codierten Koeffizienten und der Parameter des angepaßten Filterns zum Durchführen ihrer gleichzeitigen Übertragung zu der Decodiervorrichtung.

5. System nach Anspruch 4, dadurch gekennzeichnet, daß das Modul zum Auswählen der optimalen Parameter des Filterns und Speichern der Parameter des angepaßten Filterns, der Verstärkung g(j) und des optimalen Filterprofils Hj(f) aufweist:
- ein Untermodul (130) für die Verarbeitung des ursprünglichen Signals x(n) und des decodierten Signals x''(n) mittels diskreter Fourier-Transformation (TFD) an P Abtastproben mit P < N, wobei das Untermodul jeweils die entsprechenden Transformationskoeffizienten X(k), X''(k) ausgibt,
- ein Untermodul (131) zum Berechnen von bemerkenswerten Werten S1(k), S2(k), S3(k), S4(k), mit $\text{k ε [0, P/2-1]}$ ausgehend von den Transformationskoeffizienten X(k) und X''(k), wobei die bemerkenswerten Werte repräsentativ für die Energie und die Energieverteilung in den betreffenden P Abtastproben sind, unabhängig von den Filterprofilen,
- ein Untermodul (132) zum Auswählen der Filterprofile, welches als Eingang die bemerkenswerten Werte S1(k), S2(k), S3(k), S4(k) empfängt und die Parameter des angepaßten Filterns, der Verstärkung g(j) und des optimalen Filterprofils Hj(f) ausgibt, wobei diese Parameter in Form der Nummer j des Filterprofils und des entsprechenden Wertes der Verstärkung g(j) ausgegeben werden.

6. System nach Anspruch 5, dadurch gekennzeichnet, daß das Untermodul zum Auswählen der Filterprofile aufweist:
- eine Anordnung von vier Speicherblöcken (1321 bis 1324) vom Schreib-/Lesespeicher-Typ, die zum Empfangen und Speichern der bemerkenswerten Werte S1(k), S2(k), S3(k), S4(k) vorgesehen ist, wobei jeder Speicherblock im Lesemodus als Funktion der physischen Adressen i der Filtermodule adressierbar ist, und jeweils als Ausgang die bemerkenswerten Werte für das betreffende Filtermodul ausgibt,
- Einrichtungen (1325) zum Speichern einer Tabelle von Werten Tra(k), Tra2(k), die repräsentativ für den Bezugsfrequenzgang des Übergangsbandes sind,
- Subtrahiereinrichtungen (1326a, 1326b), welche vom Ausgang des dritten und vierten Speicherblocks die bemerkenswerten Werte S3(P/2) und S3(ka(i)) bzw. S4(P/2) und S4(ka(i)) empfangen und jeweils die Differenz ($\text{S3(P/2) - S3(ka(i))}$) bzw. ($\text{S4(P/2) - S4(ka(i))}$) ausgeben,
- eine Anordnung von vier Multiplizierschaltungen (1327a bis d), wobei die erste Multiplizierschaltung einerseits den von dem ersten Speicherblock ausgegebenen bemerkenswerten Wert S1(k) und andererseits den Wert Tra2(k) der von den Speichereinrichtungen ausgegebenen Tabelle von Werten empfängt und das Produkt S1(k).Tra2(k) ausgibt, die zweite Multiplizierschaltung einerseits den von dem zweiten Speicherblock ausgegebenen bemerkenswerten Wert S2(k) und andererseits den von den Speichereinrichtungen ausgegebenen Wert Tra(k) der Tabelle von Werten empfängt und das Produkt S2(k).Tra(k) ausibt, die dritte Multiplizierschaltung einerseits die von dem ersten Subtrahierer ausgegebene Differenz ($\text{S3(P/2) - S3(ka(i))}$) und andererseits einen konstanten Wert ${\text{A2 = A}}^{\text{2}}$ empfängt, wobei A für den Pegel des Frequenzgangs im abgeschnittenen Band steht, und das Produkt $\text{Demc(i) = A2.(S3(P/2) - S3(ka(i)))}$ ausgibt, die vierte Multiplizierschaltung einerseits die von dem zweiten Subtrahierer ausgegebene Differenz $\text{(S4(P/2) - S4ka(i))}$ und andererseits den konstanten Wert A empfängt und das Produkt $\text{Numc(i) = A.(S4(P12) - S4(ka(i)))}$ ausgibt,
- eine erste Summierschaltung (1328a), welche erstens über eine Akkumulierschaltung (AC1) den kumulierten Wert (Demt(i)) der von dem ersten Multiplizierer ausgegebenen Produkte, zweitens den von dem dritten Speicherblock ausgegebenen Wert $\text{Demp(i) = S3(kc(i))}$, und drittens das von dem dritten Multiplizierer ausgegebene Produkt Demc(i) empfängt und die entsprechende Summe Dem(i) ausgibt, und
- eine zweite Summierschaltung (1328b), welche erstens über eine Akkumulierschaltung (AC2) den von der Akkumulierschaltung ausgegebenen kumulierten Wert Numt(i), zweitens den vom vierten Speicherblock ausgegebenen Wert $\text{Nump(i) = S4(kc(i))}$, und drittens das von dem vierten Multiplizierer ausgegebene Produkt Numc(i) empfängt und die entsprechende Summe Num(i) ausgibt, und
- eine Schaltung (1329) zum Auswählen der Verstärkung$\text{g(i) =} \frac{\text{Num(i)}}{\text{Dem(i)}}$ und des optimalen Filters H(j) für das maximale NUM²(j)/Dem(j).

7. System nach Anspruch 4, dadurch gekennzeichnet, daß es des weiteren auf Höhe der Decodiervorrichtung aufweist:
- eine Filtereinrichtung, welche eine Mehrzahl von einzelnen Filtermodulen mit unterschiedlichen bestimmten Filterparametern aufweist,
- Einrichtungen zum Adressieren, ausgehend von den empfangenen Parametern des angepaßten Filterns, des entsprechenden Moduls zum angepaßten Filtern, wobei das Modul zum angepaßten Filtern das ursprüngliche Signal nach Übertragung x'(n) empfängt und das ursprüngliche Signal nach Übertragung und Verarbeitung xt(n) ausgibt.

8. System nach Anspruch 7, dadurch gekennzeichnet, daß jedes einzelne Filtermodul über seine Filterparameter, Werte der Verstärkung g(i) und des Filterprofils definiert ist, die über ihre Adresse registriert und gespeichert werden.
